# EUROPEAN PATENT APPLICATION

(11) **EP 2 296 426 A1**
(43) Date of publication of application: **16.03.2011**
(21) Application number: 09799968.4
(22) Date of filing: 09.07.2009
(51) Int. Cl.: H04W 88/00

(54) **METHOD, DEVICE AND SYSTEM FOR WIRELESS SELF-RETURN**

(30) Priority: 21.07.2008 CN 200810142548
(71) Applicant: Huawei Technologies Co., Ltd., Longgang District, Shenzhen Guangdong 518129 (CN)
(72) Inventor: LAN, Haiqing, 518129 Shenzhen (CN); LI, Rongqiang, 518129 Shenzhen (CN)
(74) Representative: Kreuz, Georg Maria
(86) International application number: PCT/CN2009/072696
(87) International publication number: WO 2010/009653

(57) **Abstract**

A wireless self backhaul method, apparatus, and system are disclosed. The communication system includes a NodeB-target, a User Equipment (UE)-hub, a NodeB-hub, and a Base Station Control Node (BSCN); and a bearer network exists between the NodeB-hub and the BSCN. The method includes: The NodeB-hub receives uplink data sent by the UE-hub through an air interface, where the uplink data includes uplink data that needs to be sent by the NodeB-target to the BSCN; the NodeB-hub resolves the received uplink data, and sends the resolved uplink data to a transmission interface between the NodeB-hub and the BSCN; and the uplink data on the transmission interface is processed into cells directly bearable on a bearer network, and the cells n the bearer network are sent to the BSCN. The technical solution under the present invention makes the application of the bearer network more flexible, and expands the use scope of wireless self backhaul.

## Description

This application claims priority to Chinese Patent Application No. 200810142548.4, filed with the Chinese Patent Office on July 21, 2008 and entitled "Wireless Self Backhaul Method, Apparatus and System", which is incorporated herein by reference in its entirety.

### FIELD OF THE INVENTION

The present invention relates to the wireless communication field, and in particular, to a wireless self backhaul method, apparatus, and system.

### BACKGROUND OF THE INVENTION

With the development of communication technologies, Wideband Code Division Multiple Access (WCDMA) mobile communication systems have been growing rapidly in recent years. Hundreds of WCDMA networks have been deployed globally so far to implement communication anytime anywhere.

For operators, the following circumstances may occur: On one hand, in the vast rural or suburban areas, multiple Third Generation (3G) carriers are bought. In fact, some of the carriers are idle because traffic is low; on the other hand, in the vast rural or suburban areas, the wired transmission resources may be insufficient, and it is impossible to deploy enough base stations. Therefore, operators are highly interested in studying how to use the idle carriers to transmit Iub interface data between the base station (the base station in the 3G system is also known as a NodeB) and the Radio Network Controller (RNC).

Wireless backhaul attracts more and more attention of operators because it prevents high costs and wiring difficulty involved in the wired networking. In the process of implementing the present invention, the inventor finds that, in the prior art, no mature wireless self backhaul solution is available, and that the idle carriers are not fully used in transmitting data over the Iub interface. Therefore, wireless resources are wasted to some extent.

The prior art and its problems described above take a WCDMA system as an example. It is understandable that similar problems exist in other systems such as the Global System For Mobile Communications (GSM), Time Division-Synchronous Code Division Multiple Access (TD-SCDMA) system, Code Division Multiple Access (CDMA) 2000 system, Worldwide Interoperability for Microwave Access (WiMAX) system, and Long Term Evolution (LTE) system.

### SUMMARY OF THE INVENTION

In view of the problems in the prior art, the embodiments of the present invention provide a wireless self backhaul method, apparatus, and system, so that a bearer network can be used flexibly and that the use of wireless self backhaul is expanded in scope.

A wireless self backhaul method in a communication system is provided in an embodiment of the present invention. The system includes a NodeB-target, a User Equipment (UE)-hub, a NodeB-hub, and a Base Station Controll Node (BSCN). A bearer network exists between the NodeB-hub and the BSCN. The method includes: by the NodeB-hub, receiving uplink data sent by the UE-hub through an air interface, where the uplink data includes uplink data that needs to be sent by theNodeB-target to the BSCN; resolving the received uplink data, and sending the resolved uplink data to a transmission interface between the NodeB-hub and the BSCN; and on the transmission interface, processing the resolved uplink data into cells directly bearable on a bearer network, and sending the cells through the bearer network to the BSCN.

A wireless communication device is provided in another embodiment of the present invention. The wireless communication device is applied to a wireless self backhaul system. The system includes a NodeB-target, a UE-hub, and a BSCN. A bearer network exists between the wireless communication device and the BSCN. The wireless communication device includes: a first receiving unit, configured to receive uplink data sent by the UE-hub through an air interface, where the uplink data includes uplink data that needs to be sent by the NodeB-target to the BSCN; a first processing unit, configured to resolve the received uplink data, and send the resolved uplink data to a transmission interface between the wireless communication device and the BSCN; and an interface processing unit, configured to process the resolved uplink data on the transmission interface into cells directly bearable on a bearer network, and send the cells through the bearer network to the BSCN.

A BSCN is provided in an embodiment of the present invention. The BSCN is applied to a wireless self backhaul system. The system includes a NodeB-target, a UE-hub, and a NodeB-hub. A bearer network exists between the NodeB-hub and the BSCN. The BSCN includes: a receiving unit, configured to receive cells that carry uplink data from a bearer network between the BSCN and the NodeB-hub, where the uplink data is processed by the NodeB-hub into cells directly bearable on the bearer network; and a processing unit, configured to recover the uplink data from the received cells that carry the uplink data, through a protocol conversion function.

A wireless self backhaul system is provided in an embodiment of the present invention. The system includes a NodeB-target, a UE-hub, the foregoing wireless communication device, and the foregoing BSCN.

In the technical solution under the present invention, the NodeB-hub receives the uplink data sent by the UE-hub through an air interface, resolves the received uplink data, sends the resolved uplink data to a transmission interface between the NodeB-hub and the BSCN, processes the uplink data into cells directly bearable on the bearer network, and sends the cells through the bearer network to the BSCN. Through such a solution, the bearer network between the NodeB-hub and the BSCN is applied more flexibly, the requirements on the bearer network are lowered, and the use scope of the wireless backhaul is expanded.

### BRIEF DESCRIPTION OF THE DRAWINGS

FIG. 1 shows architecture of a wireless self backhaul system provided in an embodiment of the present invention;
FIG. 2 shows a protocol stack of devices for wireless self backhaul in an embodiment of the present invention;
FIG. 3 is a flowchart of a wireless self backhaul method provided in an embodiment of the present invention;
FIG. 4 shows a protocol stack of devices applied in a wireless self backhaul method in an embodiment of the present invention;
FIG. 5 shows a structure of a wireless communication device provided in an embodiment of the present invention;
FIG. 6 shows a structure of a wireless communication device provided in an embodiment of the present invention; and
FIG. 7 shows a structure of a BSCN provided in an embodiment of the present invention.

### DETAILED DESCRIPTION OF THE EMBODIMENTS

To make the technical solution, objectives and merits of the present invention clearer, the following describes the embodiments of the present invention in more detail with reference to the accompanying drawings.

Considering the idle carriers in certain areas of the existing network currently and insufficiency of wired transmission resources, the embodiments of the present invention provide a solution of wireless self backhaul to make more efficient use of the wireless resources of a NodeB in the implementation of wireless self backhaul.

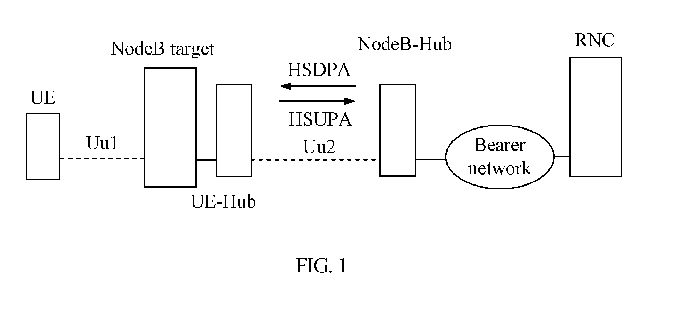

Taking the WCDMA system as an example, a wireless self backhaul solution applied in a wireless communication system is disclosed in an embodiment of the present invention. The overall architecture of the system is shown in FIG. 1. The wireless communication system includes a UE, a NodeB-target, a UE-hub, a NodeB-hub, and an RNC. A bearer network such as Asynchronous Transfer Mode (ATM), IP bearer network, Dynamic Synchronous Transfer Mode (DTM) network, or Ethernet may exist between the RNC and the NodeB-hub. It is also possible that no direct bearer network exists between the RNC and the NodeB-target.

Taking uplink as an example, the transmission process of the wireless self backhaul of the NodeB in this embodiment is as follows: The data of the UE is sent to the NodeB-target through air interface Uu1, and the NodeB-target sends the data to the UE-hub, where the UE-hub has a wired connection with the NodeB-target. The UE-hub needs to send the recieved data from the NodeB-target to the RNC, where the received data includes the data of the UE, or additionally, the data generated by the NodeB-target. In this embodiment, the received data is also referred to as "Iub interface data". However, because no direct bearer network exists between the RNC and the NodeB-target, firstly the UE-hub sends the Iub interface data to the NodeB-hub through a wireless air interface Uu2, and then the NodeB-hub forwards the received data to the bearer network through its Iub interface. Through the bearer network, the data mentioned above is sent to the RNC. It should be noted that the foregoing description takes the sending of the uplink data of the UE as an example. Accordingly, the Iub interface data may be the data of the UE (namely, the UE data that is received by the NodeB-target from the UE and needs to be sent to the RNC), or the data that is generated by the NodeB-target and needs to be sent to the RNC. For example, the Iub interface data may be the relevant control and maintenance data to be transmitted between the NodeB-target and the RNC, or other data to be transmitted between the NodeB-target and the RNC.

Generally, the uplink refers to the direction from the NodeB-target to the RNC through the NodeB-hub, and the downlink refers to the direction from the RNC to the NodeB-target through the NodeB-hub. The downlink process is reverse to the uplink process. As far as the downlink is concerned, the Iub interface data may be the data to be sent from the RNC to the UE, and the data that is generated by the RNC and needs to be sent to the NodeB-target. For example, the Iub interface data may be the relevant control and maintenance data to be transmitted between the NodeB-target and the RNC, or other data to be transmitted between the NodeB-target and the RNC.

The air interface transmission between the NodeB-target and the NodeB-hub may be based on these air interface technologies: High Speed Downlink Packet Access (HSDPA), High Speed Uplink Packet Access (HSUPA), High Speed Packet Access Plus (HSPA+) (including HSDPA+/HSUPA+), or Dedicated Channel (DCH). If higher bandwidth is required, the HSDPA, HSUPA or HSPA+ technology is preferred for transmission between the NodeB-target and the NodeB-hub.

Taking the Universal Mobile Telecommunications System (UMTS) as an example, the bandwidth of a carrier is 5 MHz. Generally, one mobile operator has more than one carrier, and only some of the carriers are used for carrying out the services of the mobile operator and the remaining carriers are idle. Through the technical solution provided in the foregoing embodiment, idle carriers may be put into use, and the air interface is used to transmit data between the NodeB-target and the RNC. In this way, the wireless self backhaul of the NodeB is implemented, and the wireless resources can be used more efficiently.

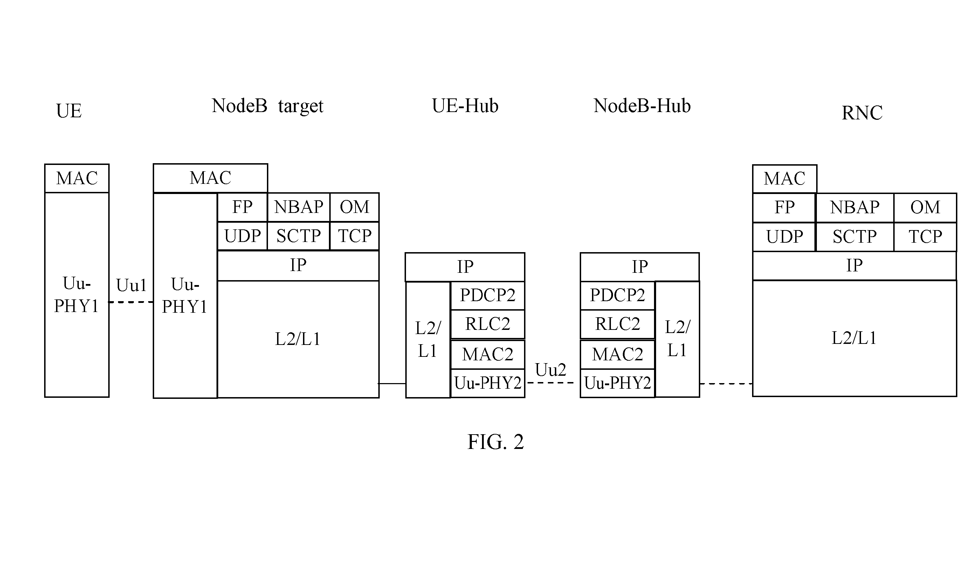

Specifically, FIG. 2 shows a protocol stack of the devices in the foregoing embodiment. As shown in FIG. 2, in the process of implementing the solution in the foregoing embodiment, a possible scenario is: The Packet Data Convergence Protocol (PDCP) of layer 2 between the UE-hub and the NodeB-hub only bears IP service. However, the bearer network between the NodeB-hub and the RNC may be a non-IP bearer network such as the ATM bearer network. Because the IP packets cannot be transmitted on non-IP networks directly, the wireless self backhaul solution above is not directly applicable to the ATM bearer network, and imposes higher requirements on the bearer network. Such requirements on the bearer network increase costs of the bearer network and restrict the application of wireless self backhaul.

Therefore, a wireless self backhaul method in another embodiment of the present invention provides further technical scheme based on the technical solution of the previous embodiment. The overall solution is: A NodeB-hub receives uplink data sent by a UE-hub through an air interface, where the uplink data includes uplink data that needs to be sent by a NodeB-target to a BSCN; the NodeB-hub resolves the received uplink data, and sends the resolved uplink data to a transmission interface between the NodeB-hub and the BSCN; and the uplink data on the transmission interface is processed into cells that can be directly bearable on a bearer network, and the cells are sent to the BSCN through the bearer network.

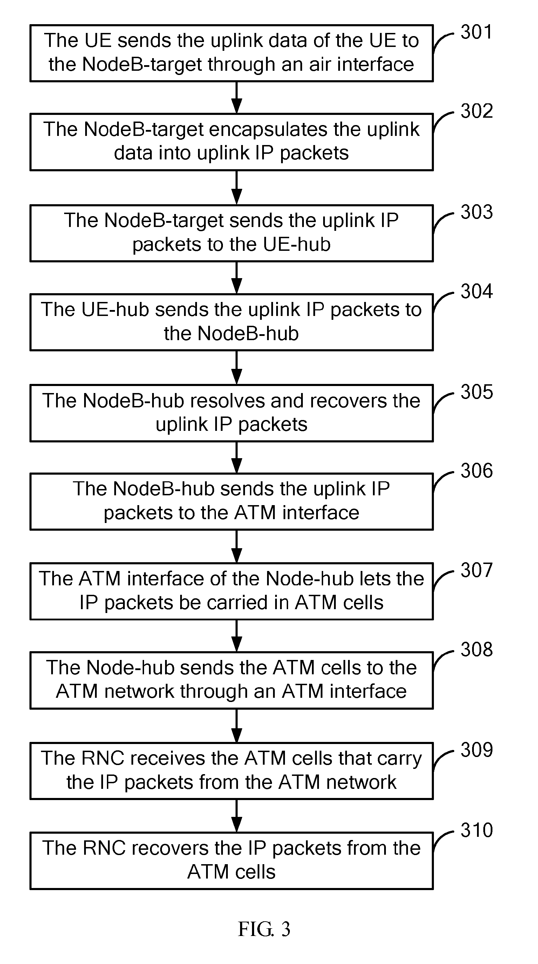

The following provides more details with reference to embodiments. FIG. 3 is a flowchart of a wireless self backhaul method. It is still assumed that the application environment is in a WCDMA system, and that the bearer network between the NodeB-hub and the RNC is an ATM bearer network. As shown in FIG. 3, the technical solution applied to the uplink direction is described as follows:
Step 301: The UE sends the uplink data of the UE to the NodeB-target through an air interface.
   In this step, the uplink data of the UE may be high-speed upload service data or other service data.
Step 302: The NodeB-target encapsulates the uplink data into uplink IP packets.
   In this step, the uplink data may include not only the uplink data of the UE, but also the data generated by the NodeB-target. The NodeB-target may encapsulate all such data into uplink IP packets.
Step 303: The NodeB-target sends the uplink IP packets to the UE-hub through direct connection.
Step 304: The UE-hub sends the received uplink IP packets to the NodeB-hub by forwarding the IP packets through a wireless air interface between the UE-hub and the NodeB-hub.
Step 305: The NodeB-hub resolves the data received from the UE-hub and recovers the uplink IP packets that need to be routed to the RNC.
Step 306: The NodeB-hub sends the uplink IP packets that need to be routed to the RNC to an ATM interface.
   It should be noted that as regards the UMTS network, the interface between the NodeB-hub and the RNC is Iub interface; as regards the transmission interface, the transmission interface refers to ATM interface.
Step 307: The ATM interface of the NodeB-hub carries the IP packets in ATM cells through IP over ATM (IPoA).
   In this step, a Permanent Virtual Channel (PVC) may be set up between the NodeB-hub and the RNC beforehand, and the NodeB-hub and the RNC each binds the IP address to the ATM address. Because the IP address of the uplink IP packets is the IP address of the RNC, the NodeB-hub needs only to bind the uplink IP packets to the ATM address of the RNC, so as to transmit to the RNC the IP packets carried in the ATM cells through the PVC from the NodeB-hub to the RNC.
Step 308: The NodeB-hub sends the ATM cells that carry the IP packets to the ATM network, through an ATM interface.
Step 309: The RNC receives the ATM cells that carry the IP packets from the ATM network.
Step 310: The RNC recovers the IP packets from the received ATM cells that carry the IP packets.

Specifically, the RNC recovers the IP Iub interface data of the NodeB-target through an IPoA protocol.

It is understandable that: To implement the technical solution of the present invention, the NodeB-hub and the RNC need to support IPoA. The interface between the NodeB-hub and the RNC may implement the functions of L2/L1 by means of IPoA. Specifically, an IPoA protocol and an ATM protocol may be added onto the transmission interface between the NodeB-hub and the RNC.

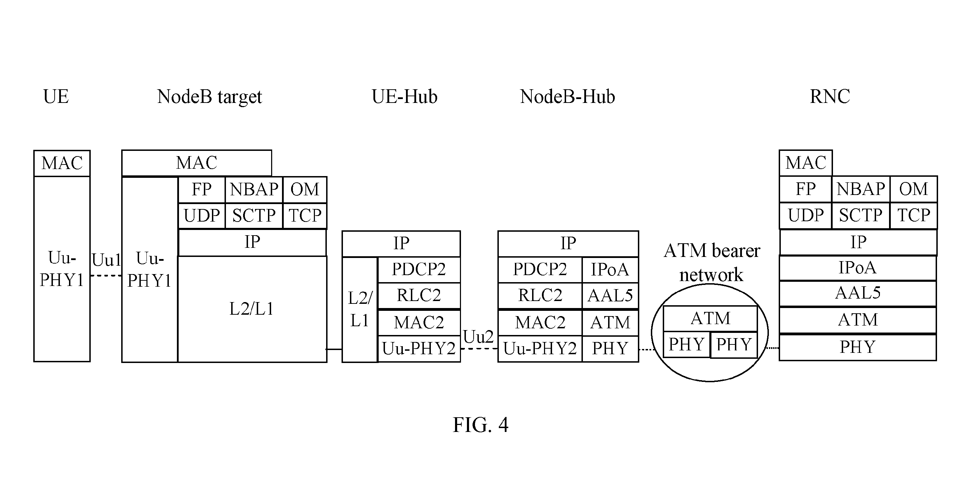

FIG. 4 shows a protocol stack of devices for wireless self backhaul in an embodiment of the present invention. As shown in FIG. 4, IPoA, ATM Adaptation Layer 5 (AAL5), ATM, and Physical layer (PHY) can be configured on the NodeB-hub and the RNC. That is, the specific protocols applied may include IPoA, AAL5, ATM, and PHY. For example, the protocols are arranged from higher layers to lower layers as: IPoA, AAL5, ATM, and PHY. In this way, the IP packets to be sent are carried in the ATM cells in the sending direction, and the ATM cells are sent to the ATM network through an ATM interface. In the receiving direction, the ATM cells that carry the IP packets are received from the ATM network. Through IPoA, the IP packets are recovered from the ATM cells that carry the IP packets. Through such a technical solution to wireless self backhaul, different types of bearer networks can be applied flexibly, the requirements on the bearer network are lowered, the costs of the bearer network are reduced, and the use of the wireless backhaul is expanded in scope. When an IPoA protocol and an ATM protocol are applied to the transmission interface between the NodeB-hub and the RNC, the ATM network can bear IP packets directly, thus avoiding replacement of the existing ATM network and protecting the existing investment of the operator.

It should be noted that the protocol stack above the IP layer may vary because of the differences in wireless technology and the implementation conditions of each vendor. In the example given in FIG. 4, the OM/TCP/IP bearer is applied, but it is understandable that other bearers such as the OM/UDP/IP bearer are also applicable. The bearer mode of the protocol stack above the IP layer does not affect the implementation of the technical solution under the present invention.

The uplink data transmission of wireless self backhaul is described above with examples. The downlink data transmission is reverse to the uplink data transmission, and includes: On the transmission interface, the BSCN processes the downlink data that needs to be sent to the NodeB-target into cells directly bearable on a bearer network, and sends the cells to the bearer network; the NodeB-hub receives the cells from the bearer network, recovers the downlink data from the cells, and sends the downlink data to the UE-hub through an air interface; and the UE-hub resolves the received downlink data, and sends the resolved downlink data to the NodeB-target. The downlink data transmission may further include: The NodeB-target sends the downlink data to the UE.

In this embodiment, it is assumed that the bearer network is an ATM bearer network, and that the service protocol type carried at layer 2 between the NodeB-target and the NodeB-hub is IP. However, the technical solution under the present invention is not limited to that. As mentioned above, the bearer network may be an IP bearer network, a DTM network, or an Ethernet.

Although the WCDMA system is taken as an example in the foregoing embodiment, the technical solution under the present invention is also applicable to other systems such as GSM, TD-SCDMA, CDMA2000, WiMAX, and LTE. In the systems described above, the name of the base station varies. For example, the name is Base Transceiver Station (BTS) in the GSM, NodeB in the WCDMA and TD-SCDMA systems, and evolved NodeB (eNodeB) in the LTE system. All of them are uniformly called "base station". A NodeB that is directly connected with a BSCN and exists in a bearer network serves as a NodeB-hub. A NodeB that transmits data with the UE through an air interface and is connected with the UE-hub through wired connection serves as a NodeB-target. In different systems mentioned above, the name of the network node capable of controlling the base station varies. For example, the name is Base Station Controller (BSC) in the GSM system, and RNC in the WCDMA and TD-SCDMA systems. It should be noted that although the LTE system is in a flat architecture, the LTE system still has a network node for controlling the base station, for example, a Gateway (GW). Therefore, all network nodes capable of controlling the base station are uniformly called "BSCN".

In other words, the technical solution under the present invention deals with how to transmit data between the NodeB and the network element directly connected with the NodeB in the bearer network. The difference (such as the difference of the air interface transmission protocol) arising from difference of the system standard is not the subject-matter of the present invention, and does not affect the implementation of the technical solution under the present invention.

Another scenario is: A bearer network also exists between the NodeB-target and the BSCN. In this case, two transmission lines exist between the NodeB-target and the BSCN. One is a transmission line of wireless self backhaul, and the other is a transmission line that passes through the bearer network between the NodeB-target and the BSCN. In this case, the uplink or downlink data transmission may be performed in load sharing or active-standby mode. The load sharing or active-standby mode relieves the transmission pressure and improves the transmission efficiency on the basis of using the idle carrier resources.

A wireless self backhaul apparatus and system are provided in an embodiment of the present invention. The following describes the apparatus embodiment and the system embodiment with reference to accompanying drawings.

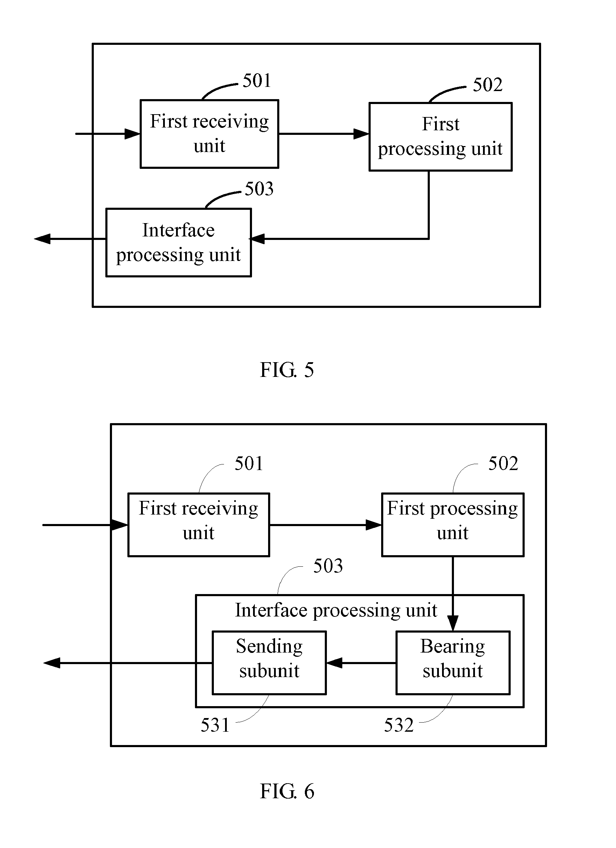

FIG. 5 shows a structure of a wireless communication device provided in an embodiment of the present invention. The device is applied in a wireless self backhaul system. The system includes a NodeB-target, a UE-hub, and a BSCN. A bearer network exists between the wireless communication device and the BSCN. As shown in FIG. 5, the wireless communication device includes: a first receiving unit 501, configured to receive uplink data sent by a UE-hub through an air interface, where the uplink data includes uplink data that needs to be sent by a NodeB-target to a BSCN; a first processing unit 502, configured to resolve the received uplink data, and send the resolved uplink data to a transmission interface between the wireless communication device and the BSCN; and an interface processing unit 503, configured to process the uplink data on the transmission interface into cells directly bearable on a bearer network, and send the cells to the BSCN through the bearer network.

Further, the uplink data may be uplink IP packets, and the bearer network may be an ATM bearer network, and accordingly, the transmission interface is an ATM interface. FIG. 6 shows a structure of a wireless communication device provided in an embodiment of the present invention. In this case, the interface processing unit 503 may include two subunits: bearing subunit 531 and sending subunit 532. The bearing subunit 531 lets the ATM cells bear the uplink IP packets through IPoA; and the sending subunit 532 sends the ATM cells processed by the bearing subunit to BSCN through the ATM network.

Specifically, the protocol applied to the transmission interface between the wireless communication device and the BSCN may be IPoA/AAL5/ATM/PHY.

The foregoing description about the wireless communication device is given from the perspective of sending the uplink data. In the downlink direction, the wireless communication device is also capable of receiving (as regards the BSCN) and sending (as regards the NodeB-target or UE-hub) data. Specifically, the device receives the cells that carry the downlink data from the BSCN through the bearer network, performs protocol conversion for them, and recovers the downlink data. Afterward, the device sends the downlink data to the UE-hub or NodeB-target. The wireless communication device may be the NodeB-hub described in the method embodiment above.

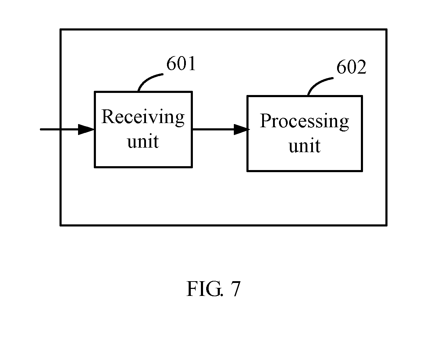

FIG. 7 shows a structure of a BSCN provided in an embodiment of the present invention. The device is applied to a wireless self backhaul system. The system includes a NodeB-target, a UE-hub, and a NodeB-hub. A bearer network exists between the BSCN and the NodeB-hub. The BSCN includes: a receiving unit 601, configured to receive cells that carry uplink data from a bearer network between a BSCN and a NodeB-hub, where the uplink data is processed by the NodeB-hub into cells directly bearable on the bearer network; and a processing unit 602, configured to recover the uplink data from the received cells that carry the uplink data, through a protocol conversion function.

Further, the uplink data may be uplink IP packets, and the bearer network may be an ATM bearer network, and accordingly, the transmission interface is an ATM interface. In this case, the processing unit is configured to recover the uplink IP packets from the received ATM cells through an IPoA protocol.

As mentioned above, the protocol applied to the transmission interface between the BSCN and the NodeB-hub may be IPoA/AAL5/ATM/PHY.

In the uplink direction, the BSCN is capable of receiving (as regards the NodeB-hub) and sending (as regards the core network) data. Specifically, the BSCN receives the cells that carry the uplink data from the NodeB-hub through the bearer network, performs protocol conversion for them, and recovers the uplink data. Afterward, the uplink data is sent to the core network.

A wireless self backhaul system is provided in an embodiment of the present invention. The system includes a NodeB-target, a UE-hub, the foregoing wireless communication device, and the foregoing BSCN.

The technical effects brought by the system embodiment have been expounded in the method embodiment above, and are not further described here.

In the embodiments of the present invention, the word "receiving" refers to obtaining information from another module actively or receiving information sent by another module.

It is understandable to those skilled in the art that the accompanying drawings are only schematic diagrams of the preferred embodiments, and that the modules or processes in the accompanying drawings are not mandatory for implementing the present invention.

Persons of ordinary skill in the art should understand that all or part of the steps of the method according to any embodiment of the present invention may be implemented by a program instructing relevant hardware. The program may be stored in a computer readable storage medium. When the program runs, one step or any combination of the steps in the method embodiment of the present invention are performed.

All functional units in the embodiments of the present invention may be integrated into a processing module, or exist independently, or two or more of such units are integrated into one module. The integrated module may be hardware or a software module. When being implemented as a software module and sold or applied as an independent product, the integrated module may be stored in a computer-readable storage medium.

The storage medium may be a Read Only Memory (ROM), a magnetic disk, or a Compact Disk-Read Only Memory (CD-ROM).

In conclusion, the technical solution under the present invention reduces the requirements on the bearer network, reduces the costs of the bearer network, and expands the use of self backhaul in scope.

The above descriptions are merely preferred embodiments of the present invention, but not intended to limit the scope of the present invention. Any modifications, variations or replacements that can be easily derived by those skilled in the art shall fall within the scope of the present invention. Therefore, the scope of the present invention is subject to the appended claims.

## Claims

1. A wireless self backhaul method in a communication system, wherein:
the system comprises a NodeB-target, a User Equipment, UE,-hub, a NodeB-hub, and a Base Station Control Node, BSCN; a bearer network exists between the NodeB-hub and the BSCN; and the method comprises:
receiving, by the NodeB-hub, uplink data sent by the UE-hub through an air interface, wherein the uplink data comprises uplink data that needs to be sent by the NodeB-target to the BSCN;
resolving, by the NodeB-hub, the received uplink data, and sending the resolved uplink data to a transmission interface between the NodeB-hub and the BSCN; and
on the transmission interface, processing the resolved uplink data into cells directly bearable on the bearer network, and sending the cells through the bearer network to the BSCN.

2. The method according to claim 1, wherein:
the data resolved by the NodeB-hub is uplink Internet Protocol, IP, packets, and the bearer network is a non-IP bearer network.

3. The method according to claim 2, wherein:
the bearer network is an Asynchronous Transfer Mode, ATM, bearer network, and the transmission interface is an ATM interface;
and the processing the resolved uplink data on the transmission interface into the cells directly bearable on the bearer network and sending the cells through the bearer network to the BSCN comprises:
on the ATM interface, using ATM cells to bear the uplink IP packets through IP over ATM, IPoA, and sending the ATM cells through the ATM bearer network to the BSCN.

4. The method according to claim 3, wherein:
protocols applied to the transmission interface comprise: IPoA, ATM Adaptation Layer 5, AAL5, ATM, and Physical Layer, PHY.

5. The method according to claim 4, further comprising:
receiving, by the BSCN, the ATM cells that carry the uplink IP packets from the ATM bearer network, and recovering the uplink IP packets from the received ATM cells through an IPoA protocol.

6. The method according to any one of claims 1-5, wherein the uplink data that needs to be sent by the NodeB-target to the BSCN comprises:
UE uplink data that is received by the NodeB-target from a UE and needs to be sent to the BSCN; and/or
uplink data that is generated by the NodeB-target and needs to be sent to the BSCN.

7. The method according to any one of claims 1-5, further comprising:
processing, by the BSCN, downlink data that needs to be sent to the NodeB-target into cells directly bearable on the bearer network and sending the cells through the bearer network on the transmission interface;
receiving, by the NodeB-hub, the cells from the bearer network, recovering the downlink data from the cells, and sending the downlink data to the UE-hub through the air interface; and
resolving, by the UE-hub, the received downlink data, and sending the resolved downlink data to the NodeB-target.

8. The method according to any one of claims 1-5, wherein:
if a bearer network exists between the NodeB-target and the BSCN, data is transmitted in load sharing mode or active-standby mode on a transmission line of the bearer network between the NodeB-target and the BSCN and on a transmission line of wireless self backhaul.

9. A wireless communication device applied in a wireless self backhaul system, wherein:
the system comprises a NodeB-target, a User Equipment, UE, -hub, and a Base Station Control Node, BSCN; a bearer network exists between the wireless communication device and the BSCN; and the wireless communication device comprises:
a first receiving unit, configured to receive uplink data sent by the UE-hub through an air interface, wherein the uplink data comprises uplink data that needs to be sent by the NodeB-target to the BSCN;
a first processing unit, configured to resolve the received uplink data, and send the resolved uplink data to a transmission interface between the wireless communication device and the BSCN; and
an interface processing unit, configured to process the resolved uplink data on the transmission interface into cells directly bearable on the bearer network, and send the cells through the bearer network to the BSCN.

10. The device according to claim 9, wherein:
the uplink data is uplink Internet Protocol, IP, packets, and the bearer network is an Asynchronous Transfer Mode, ATM, bearer network, and the transmission interface is an ATM interface; and
the interface processing unit comprises:
a bearing subunit, configured to use ATM cells to bear the uplink IP packets through IP over ATM, IPoA; and
a sending subunit, configured to send the ATM cells processed by the bearing subunit through the ATM bearer network to the BSCN.

11. The device according to claim 10, wherein:
protocols applied to the transmission interface comprise: IPoA, ATM Adaptation Layer 5 ,AAL5, ATM, and Physical Layer, PHY.

12. A Base Station Control Node, BSCN, applied to a wireless self backhaul system, wherein:
the system comprises a NodeB-target, a User Equipment, UE, -hub, and a NodeB-hub; a bearer network exists between the BSCN and the NodeB-hub; and the BSCN comprises:
a receiving unit, configured to receive cells that carry uplink data from the bearer network between the BSCN and the NodeB-hub, wherein the uplink data is processed by the NodeB-hub into cells directly bearable on the bearer network; and
a processing unit, configured to recover the uplink data from the received cells that carry the uplink data through a protocol conversion function.

13. The BSCN according to claim 12, wherein:
the uplink data is uplink Internet Protocol, IP, packets, the bearer network is an Asynchronous Transfer Mode, ATM, bearer network, the transmission interface is an ATM interface, and the cells are ATM cells; and
the processing unit is configured to recover the uplink IP packets from the received ATM cells through IP over ATM, IPoA.

14. The BSCN according to claim 12 or claim 13, wherein:
protocols applied to the transmission interface comprise: IPoA, ATM Adaptation Layer 5, AAL5, ATM, and Physical Layer, PHY.

15. A wireless self backhaul system, comprising:
a NodeB-target, a User Equipment, UE,-hub, the wireless communication device according to any one of claims 9-11, and the BSCN according to any one of claims 12-14.
